# EUROPÄISCHE PATENTSCHRIFT

(11) **EP 3 099 955 B1**
(45) Veröffentlichungstag und Bekanntmachung des Hinweises auf die Patenterteilung: **04.10.2017**
(21) Anmeldenummer: 15706671.3
(22) Anmeldetag: 21.01.2015
(51) Int. Cl.: F16D 48/06, F16D 48/02, F16D 25/12

(54) **VORRICHTUNG ZUR HYDRAULISCHEN BETÄTIGUNG EINER KRAFTFAHRZEUG-REIBKUPPLUNG**
DEVICE FOR HYDRAULICALLY ACTUATING A MOTOR VEHICLE FRICTION CLUTCH
DISPOSITIF D'ACTIONNEMENT HYDRAULIQUE D'UN EMBRAYAGE À FRICTION DE VÉHICULE AUTOMOBILE

(30) Priorität: 30.01.2014 DE 102014001073
(43) Veröffentlichungstag der Anmeldung: 07.12.2016
(73) Patentinhaber: FTE automotive GmbH, 96106 Ebern (DE)
(72) Erfinder: HEUBNER, Wilhelm, 96274 Itzgrund (DE)
(74) Vertreter: Oppermann, Mark
(86) Internationale Anmeldenummer: PCT/EP2015/000104
(87) Internationale Veröffentlichungsnummer: WO 2015/113744

(56) Entgegenhaltungen:
- EP-A1- 0 918 171
- EP-A1- 2 599 680
- DE-A1- 4 121 016
- DE-A1- 19 856 587

## Beschreibung

### TECHNISCHES GEBIET

Die vorliegende Erfindung bezieht sich auf eine Vorrichtung zur hydraulischen Betätigung einer Kraftfahrzeug-Reibkupplung gemäß dem Oberbegriff des Patentanspruchs 1. Insbesondere bezieht sich die Erfindung auf eine solche Vorrichtung, wie sie in Kraftfahrzeugen mit erweiterten Start-Stopp-Systemen zum Einsatz kommt und die hierfür eine manuelle wie auch eine automatisierte hydraulische Betätigung der Kraftfahrzeug-Reibkupplung gestattet.

### STAND DER TECHNIK

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der z.B. über ein Kupplungspedal betätigt werden kann. Der Geberzylinder ist über eine Druckleitung mit einem Nehmerzylinder hydraulisch verbunden, so dass der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Kraftfahrzeug-Reibkupplung von dem Nehmerzylinder mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen.

Für eine (teil)automatisierte hydraulische Betätigung der Kraftfahrzeug-Reibkupplung wurde schon vorgeschlagen (siehe z.B. die Druckschriften DE 41 21 016 A1 und DE 10 2007 002 842 A1), die hydraulische Kupplungsbetätigung um eine hydraulische Druckquelle (Motorpumpe) zu erweitern, welche über eine elektrisch ansteuerbare Ventilanordnung mit der Druckleitung zwischen dem manuell betätigbaren Geberzylinder und dem Nehmerzylinder fluidverbunden werden kann. Die Gründe für eine (teil)automatisierte Betätigung der Kraftfahrzeug-Reibkupplung sind heutzutage vielfältig: Zunächst ist hier die gewünschte Ausweitung der bekannten Start-Stopp-Systeme an Kraftfahrzeugen mit Schaltgetrieben, bei denen zur Reduktion des Kraftstoffverbrauchs der Verbrennungsmotor beim Schalten in die Neutralstellung und Trennen der Kupplung ausgeschaltet und mit Betätigen des Kupplungspedals wieder eingeschaltet wird, auf sogenannte "Start-Stopp-in-Gear"-Systeme zu nennen, bei denen es für ein Ausschalten des Verbrennungsmotors nicht mehr erforderlich ist, in die Neutralstellung zu schalten (siehe z.B. die Druckschrift WO 2000/24603 A1), und die auch einen sogenannten "Segelbetrieb", d.h. ein Rollen mit eingelegtem Gang und abgeschaltetem Verbrennungsmotor gestatten. Dann können mit einer (teil)automatisierten Kupplungsbetätigung Schäden und übermäßiger Verschleiß infolge von Missbrauch - Anfahren im "falschen" Gang, "Schnalzen-Lassen" oder nicht vollständiges Durchtreten des Kupplungspedals, etc. - verhindert werden. Auch sind Assistenzsysteme realisierbar, die durch einen geeigneten Eingriff in die Kupplungsbetätigung etwa eine Komforterhöhung im "Stopand Go-"Verkehr ermöglichen, ein "Abwürgen" des Verbrennungsmotors verhindern oder Gefahrenzustände "entschärfen" (siehe die Druckschrift DE 10 2007 002 842 A1), indem nach Erkennen einer kritischen Fahrsituation, beispielsweise einer Kollisionsgefahr mittels einer "Pre-Safe"-Sensorik durch ein automatisches Öffnen der Kupplung der Verbrennungsmotor von den Antriebsrädern abgekoppelt wird, so dass der Verbrennungsmotor die Wirkung einer Betriebsbremse des Kraftfahrzeugs nicht mehr vermindern kann.

Vorrichtungsseitig offenbart die den Oberbegriff des Patentanspruchs 1 bildende Druckschrift DE 10 2007 002 842 A1 eine hydraulische Kupplungsbetätigung mit einem manuell über ein sensiertes Pedal ansteuerbaren Geberaggregat, das einen Kolbenarbeitsraum hat, der in einer Ruhestellung über einen Nachlaufbereich mit einem Hydraulikreservoir fluidverbunden ist, einem einen Kolbenarbeitsraum aufweisenden Nehmeraggregat, das mit der Kraftfahrzeug-Reibkupplung wirkverbunden ist, und einer Druckleitung zur hydraulischen Verbindung der Kolbenarbeitsräume von Geberaggregat und Nehmeraggregat. Ferner ist eine eingangsseitig hydraulisch an das Hydraulikreservoir angeschlossene, elektromotorisch antreibbare Hydraulikpumpe vorgesehen, deren Pumpenausgang hydraulisch mit der Druckleitung verbindbar ist, wozu eine elektrisch betätigbare Steuerventilanordnung dient, die in die Druckleitung geschaltet ist. Schließlich besitzt das vorbekannte System eine Steuereinheit (CAN-Bus, Steuerschaltung), an die der Pedalsensor, die Hydraulikpumpe und die Steuerventilanordnung für eine manuelle oder automatisierte Betätigung der Kraftfahrzeug-Reibkupplung elektrisch angeschlossen sind.

Zwar ist bei diesem Stand der Technik die Sicherheit bei Stromausfall dadurch gewährleistet, dass die Steuerventilanordnung in eine die Kolbenarbeitsräume von Geberaggregat und Nehmeraggregat verbindende Stellung federvorgespannt ist. Unter Sicherheitsgesichtspunkten ist dieser Stand der Technik jedoch insofern verbesserungsbedürftig, als es für den Fahrer nicht ohne Weiteres möglich ist, durch Pedalbetätigung in einen automatischen Kupplungsvorgang einzugreifen.

Entsprechendes gilt für den Stand der Technik gemäß der Druckschrift DE 41 21 016 A1. Darüber hinaus soll die dort offenbarte Vorrichtung aufgabengemäß zwar die Vorteile beider Betätigungssysteme (automatisch und manuell) vereinen, hierfür wird jedoch ein erheblicher vorrichtungstechnischer Aufwand mit mehreren Ventilblöcken und Druck- bzw. Kraftspeichern betrieben.

### AUFGABENSTELLUNG

Der Erfindung liegt die Aufgabe zugrunde, für die hydraulische Betätigung einer Kraftfahrzeug-Reibkupplung eine Vorrichtung bereitzustellen, welche die obigen Nachteile vermeidet und die es gegenüber dem geschilderten Stand der Technik vor allem mit einem einfachen Aufbau gestattet, für die verschiedensten Zwecke (teil)automatisierte Kupplungsbetätigungsvorgänge durchzuführen, in die der Fahrer indes jederzeit problemlos eingreifen kann.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 7.

Gemäß der Erfindung umfasst eine Vorrichtung zur hydraulischen Betätigung einer Kraftfahrzeug-Reibkupplung einen manuell ansteuerbaren, mittels eines Sensors betätigungssensierten Geberzylinder, der einen Geberdruckraum hat, welcher in einer Ruhestellung über einen Nachlaufbereich mit einem Vorratsbehälter fluidverbunden ist, eine einen Nehmerdruckraum aufweisende Nehmeranordnung, die zumindest einen mit der Kraftfahrzeug-Reibkupplung wirkverbundenen Nehmerzylinder umfasst, eine Druckleitung zur hydraulischen Verbindung des Geberdruckraums mit dem Nehmerdruckraum, eine eingangsseitig hydraulisch an den Vorratsbehälter angeschlossene Motorpumpe, deren Pumpenausgang hydraulisch mit der Druckleitung verbindbar ist, eine elektrisch betätigbare Ventilanordnung, die in die Druckleitung geschaltet ist, und eine Steuereinheit, an die der Sensor, die Motorpumpe und die Ventilanordnung für eine manuelle und/oder automatisierte Betätigung der Kraftfahrzeug-Reibkupplung elektrisch angeschlossen sind, mit der Besonderheit, dass die Ventilanordnung in Parallelschaltung ein elektrisch betätigbares Proportionalventil und ein in Richtung des Geberdruckraums sperrendes erstes Rückschlagventil umfasst, während die Motorpumpe über ein in Richtung der Motorpumpe sperrendes zweites Rückschlagventil zwischen der Ventilanordnung und dem Nehmerdruckraum hydraulisch an die Druckleitung angeschlossen ist.

Mit anderen Worten gesagt unterteilt die elektrisch betätigbare Ventilanordnung die Druckleitung zwischen Geberdruckraum und Nehmerdruckraum in einen geberseitigen Leitungsabschnitt und einen nehmerseitigen Leitungsabschnitt. In den/dem nehmerseitigen Leitungsabschnitt kann ausgehend von sowohl dem Geberzylinder (manuell) über den geberseitigen Leitungsabschnitt als auch der Motorpumpe (automatisiert) über den Pumpenausgang Volumen an Hydraulikflüssigkeit verschoben und Druck aufgebaut werden, das/der dort bei geschlossenem Proportionalventil mittels der Rückschlagventile zum Geberzylinder bzw. zur Motorpumpe "eingesperrt" wird, um den Nehmerdruckraum zu beaufschlagen und damit die Kraftfahrzeug-Reibkupplung zu betätigen, z.B. auszurücken. Durch geeignete Ansteuerung des Proportionalventils und die damit bewirkte definierte Öffnung desselben ist es dann möglich, ohne Betätigung des Geberzylinders den nehmerseitigen Druck bei ggf. laufender Motorpumpe zu halten oder definiert über das Proportionalventil abzubauen, um etwa die Kraftfahrzeug-Reibkupplung wieder einzurücken, wobei die über das Proportionalventil aus dem nehmerseitigen Leitungsabschnitt abfließende Hydraulikflüssigkeit über den geberseitigen Leitungsabschnitt, den Geberdruckraum und den geeignet dimensionierten Nachlaufbereich des Geberzylinders in den Vorratsbehälter zurückgelangt. Bei einer manuellen Betätigung des Geberzylinders wird die hydraulische Verbindung zwischen dem Geberdruckraum und dem Nachlaufbereich des Geberzylinders in an sich bekannter Weise unterbrochen (beispielsweise durch "Überfahren" der zylindergehäuseseitigen Nachlaufbohrung mit dem kolbenseitigen Primärdichtelement oder mittels eines Zentralventils im Geberkolben, das bei einer Kolbenbewegung aus der Ruhestellung heraus selbsttätig schließt), so dass eine hydraulische Entlastung des nehmerseitigen Leitungsabschnitts über das Proportionalventil nicht mehr möglich ist. Dem Geberzylinder mit seinem an sich bekannten Nachlaufsystem kommt also auch eine Schaltventilfunktion zu, die es dem Fahrer jederzeit und unmittelbar, d.h. auch sehr schnell gestattet, durch manuelle (Pedal)Betätigung des Geberzylinders in eine automatisierte Betätigung der Kraftfahrzeug-Reibkupplung einzugreifen, ohne dass es hierfür zusätzlicher Ventile und/oder anderer Bauteile bedürfte. Mit einem sehr einfachen Schaltungsaufbau wird somit eine gegenüber dem eingangs geschilderten Stand der Technik unter Sicherheitsgesichtspunkten verbesserte Vorrichtung zur hydraulischen Betätigung einer Kraftfahrzeug-Reibkupplung geschaffen, mit der die verschiedensten (teil)automatisierten Betätigungsvorgänge realisierbar sind.

Grundsätzlich ist es denkbar, das Proportionalventil so auszubilden, dass es in Sperr-Null-Stellung federvorgespannt ist. Insbesondere im Hinblick auf die Ausfallsicherheit ist es aber bevorzugt, wenn das Proportionalventil in Durchgangs-Null-Stellung federvorgespannt ist.

Ferner kann vorgesehen sein, dass der Nehmerzylinder, der einen mit der Kraftfahrzeug-Reibkupplung mechanisch verbundenen Nehmerkolben aufweist, einen Anschlag besitzt, der dazu dient, einen Betätigungsweg des Nehmerkolbens zu begrenzen. Somit kann auf einfache Weise ein "Überdrücken" und eine damit eventuell einhergehende Beschädigung der Kraftfahrzeug-Reibkupplung verhindert werden, sofern nicht an der Kupplung selbst Maßnahmen zur Begrenzung des Betätigungswegs getroffen sind.

Soll die Vorrichtung für die hydraulische Betätigung einer Kraftfahrzeug-Reibkupplung mit stetig steigender Kennlinie (z.B. mit einem in etwa linearen Verlauf der Betätigungskraft über dem Betätigungsweg) eingesetzt werden, ist es in einfachster Ausgestaltung der Vorrichtung grundsätzlich möglich, auf einen Wegsensor an der Nehmeranordnung zu verzichten. Bevorzugt ist es indes, wenn an der Nehmeranordnung ein elektrisch an die Steuereinheit angeschlossener Wegsensor vorgesehen ist, mittels dessen ein nehmerseitiger, für einen Ausrückzustand der Kraftfahrzeug-Reibkupplung repräsentativer Betätigungsweg erfassbar ist. Dies ermöglicht die verschiedensten automatisierten, ggf. auch mit einer manuellen Betätigung überlappenden Betätigungen an Kraftfahrzeug-Reibkupplungen mit beliebiger - z.B., wie häufig, "katzenbuckel"-förmig verlaufender - Kennlinie.

Im weiteren Verfolg des Erfindungsgedankens kann die Nehmeranordnung einen hydraulisch vor den Nehmerzylinder geschalteten Portionierzylinder umfassen, der den Nehmerdruckraum aufweist. Somit können insbesondere vorhandene Kupplungsbetätigungssysteme unter Beibehaltung der bereits vorgesehenen Geber- und Nehmerzylinder auf einfache Weise erweitert werden, um (teil) automatisierte Kupplungsbetätigungen zu ermöglichen.

Hierbei ist es schließlich von Vorteil, wenn wenigstens der Vorratsbehälter, die Motorpumpe, das zweite Rückschlagventil und der Portionierzylinder, ggf. mit dem Wegsensor, zu einem Modul zusammengefasst sind, welches in einfacher und montagefreundlicher Weise sowie unabhängig von der Platzierung der Geber- und Nehmerzylinder im Kraftfahrzeug angeordnet werden kann, z.B. an einem besser gegen äußere Einflüsse (Temperatur, etc.) geschützten, leichter zugänglichen und/oder weniger beengten Ort. Vorzugsweise umfasst das Modul dann auch die Ventilanordnung und ggf. die Steuereinheit, so dass die für die automatisierte Kupplungsbetätigung vorgesehenen Bauteile höchstintegriert sind.

### KURZE BESCHREIBUNG DER ZEICHNUNGEN

Im Folgenden wird die Erfindung anhand bevorzugter Ausführungsbeispiele unter Bezugnahme auf die beigefügten schematischen Zeichnungen näher erläutert, in denen gleiche Bezugszeichen gleiche bzw. entsprechende Teile kennzeichnen. In den Zeichnungen zeigen:
- Fig. 1: ein Schaltbild einer Vorrichtung zur hydraulischen Betätigung einer Kraftfahrzeug-Reibkupplung nach einem ersten Ausführungsbeispiel der Erfindung, mit einer wegsensierten Nehmeranordnung,
- Fig. 2: ein Schaltbild einer Vorrichtung zur hydraulischen Betätigung einer Kraftfahrzeug-Reibkupplung nach einem zweiten Ausführungsbeispiel der Erfindung, mit einem gegenüber dem ersten Ausführungsbeispiel zusätzlichen Anschlag zur Begrenzung eines Betätigungswegs der Nehmeranordnung, und
- Fig. 3: ein Schaltbild einer Vorrichtung zur hydraulischen Betätigung einer Kraftfahrzeug-Reibkupplung nach einem dritten Ausführungsbeispiel der Erfindung, bei dem die Nehmeranordnung einen Portionierzylinder umfasst, der dem Nehmerzylinder hydraulisch vorgeschaltet ist.

In den Zeichnungen - und in der folgenden Beschreibung - wurde auf eine Darstellung von Details der Kupplungen und der über die Kupplungen wirkverbundenen Elemente (Schaltgetriebe, Verbrennungsmotor) verzichtet, weil diese Details bzw. Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

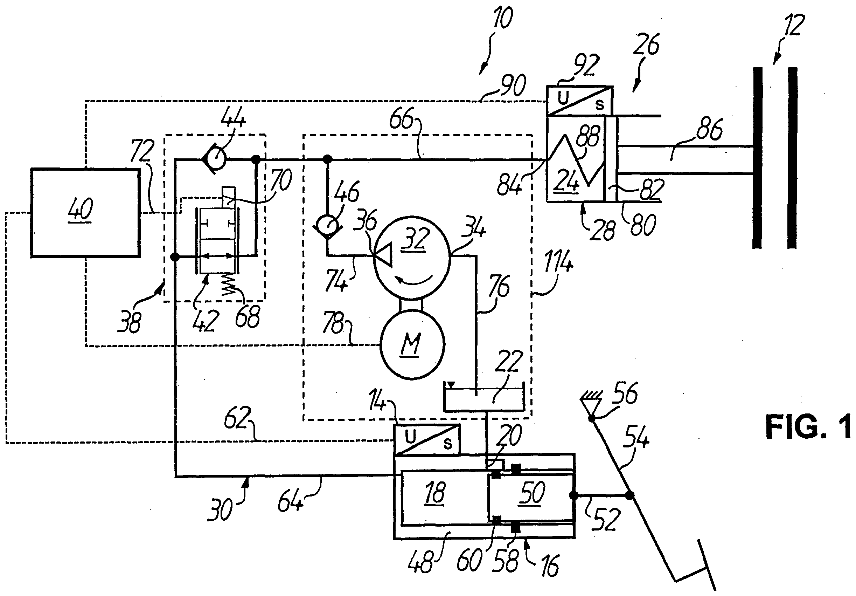

In Fig. 1 beziffert das Bezugszeichen 10 allgemein eine Vorrichtung zur hydraulischen Betätigung einer Kraftfahrzeug-Reibkupplung 12. Wie nachfolgend noch näher beschrieben werden wird umfasst die Vorrichtung 10 einen manuell ansteuerbaren, mittels eines Sensors 14 betätigungssensierten Geberzylinder 16, der einen Geberdruckraum 18 hat, welcher in einer Ruhestellung über einen Nachlaufbereich 20 mit einem Vorratsbehälter 22 fluidverbunden ist, eine einen Nehmerdruckraum 24 aufweisende Nehmeranordnung 26, die (zumindest) einen mit der Kraftfahrzeug-Reibkupplung 12 wirkverbundenen Nehmerzylinder 28 aufweist, eine Druckleitung 30 zur hydraulischen Verbindung des Geberdruckraums 18 mit dem Nehmerdruckraum 24, eine Motorpumpe 32 mit einem elektrischen Pumpenantrieb M, deren Pumpeneingang 34 hydraulisch an den Vorratsbehälter 22 angeschlossen ist, während ihr Pumpenausgang 36 hydraulisch mit der Druckleitung 30 verbindbar ist, eine elektrisch betätigbare Ventilanordnung 38, die in die Druckleitung 30 geschaltet ist, und eine Steuereinheit 40, an die (u.a.) der Sensor 14, die Motorpumpe 32, d.h. deren Pumpenantrieb M und die Ventilanordnung 38 für eine noch zu erläuternde manuelle und/oder automatisierte Betätigung der Kraftfahrzeug-Reibkupplung 12 elektrisch angeschlossen sind. Wesentlich ist, dass die Ventilanordnung 38 in Parallelschaltung ein elektrisch betätigbares Proportionalventil 42 und ein in Richtung des Geberdruckraums 18 sperrendes erstes Rückschlagventil 44 umfasst, während die Motorpumpe 32 über ein in Richtung der Motorpumpe 32 sperrendes zweites Rückschlagventil 46 zwischen der Ventilanordnung 38 und dem Nehmerdruckraum 24 hydraulisch an die Druckleitung 30 angeschlossen ist. Die Rückschlagventile 44, 46 können in ihre jeweilige Schließstellung federvorgespannt sein, dies ist in den Figuren jedoch nicht dargestellt.

Der Geberzylinder 16 weist in an sich bekannter Weise ein Geberzylindergehäuse 48 auf, das zusammen mit einem Geberkolben 50 den Geberdruckraum 18 begrenzt. An dem Geberkolben 50 ist eine Kolbenstange 52 angelenkt, die ihrerseits gelenkig mit einem Pedal 54 verbunden ist. Das Pedal 54 kann durch manuelle (Fuß)Betätigung um ein Schwenklager 56 verschwenkt werden, um vermittels der Kolbenstange 52 den Geberkolben 50 im Geberzylindergehäuse 48 axial zu verschieben und somit im Geberdruckraum 18 einen Druck aufzubauen sowie Hydraulikfluid aus dem Geberdruckraum 18 in die Druckleitung 30 zu verdrängen. Eine ggf. am Pedal 54 oder am bzw. im Geberzylinder 16 vorgesehene Rückstellfeder für den Geberkolben 50 ist hier nicht gezeigt.

Im dargestellten Ausführungsbeispiel handelt es sich bei dem Geberkolben 50 um einen sogenannten "Schaftkolben", bei dem ein den Geberzylinder 16 gegenüber der Umgebung abdichtendes, gehäusefestes (Sekundär)Dichtelement 58 mit einer am Kolbenschaft vorgesehenen Lauffläche zusammenwirkt, während ein am Kolbenkopf angebrachtes (Primär)Dichtelement 60 mit einer zylindergehäuseseitigen Lauffläche zusammenwirkt, um den Geberdruckraum 18 nach "Überfahren" der Nachlaufverbindung zum Vorratsbehälter 22 (Nachlaufbereich 20) durch das Dichtelement 60 abzudichten. Ebenso gut könnte es sich bei dem Geberkolben aber auch um einen "klassischen" Kolben handeln, der zwei "fahrende", mit einer gehäuseseitigen Lauffläche zusammenwirkende (Primär- bzw. Sekundär)Dichtelemente aufweist, oder einen sogenannten "Plungerkolben", dessen Kolbenlauffläche wenigstens mit einem gehäusefesten druckraumseitigen (Primär)Dichtelement zusammenwirkt. Auch könnte der Geberkolben mit einem Zentralventil versehen sein, das in einer Ruhestellung des Geberkolbens den Geberdruckraum mit dem Nachlaufbereich verbindet. Diesen bekannten Geberzylindervarianten ist jedenfalls gemein, dass infolge einer axialen Verschiebung des Geberkolbens im Geberzylindergehäuse aus seiner gezeigten Ruhestellung heraus die über den Nachlaufbereich bewirkte Verbindung zum Vorratsbehälter unterbrochen wird, worauf sich im Geberdruckraum erst ein Druck aufbaut.

Bei dem Sensor 14 handelt es sich im vorliegenden Fall um einen zylindergehäusefesten, magnetflussempfindlichen Sensor, z.B. einen Hallsensor, der mit einem am Geberkolben 50 angebrachten Signalelement in Form eines Permanentmagneten (nicht gezeigt) zusammenwirkt, um einen Hub s des Geberkolbens 50 zu erfassen. Derartige Sensoranordnungen an hydraulischen Geberzylindern werden beispielsweise in den Druckschriften EP 1 369 597 A2 und EP 1 489 385 A2 der gleichen Anmelderin beschrieben, auf die hiermit bezüglich des strukturellen Aufbaus und der Funktion ausdrücklich verwiesen wird. Der Sensor 14 gibt ein wegabhängiges Spannungssignal U ab, welches über eine elektrische Signalleitung 62 an die elektronische Steuereinheit 40 geleitet wird.

Die Ventilanordnung 38 unterteilt mit ihrer Parallelschaltung von Proportionalventil 42 und erstem Rückschlagventil 44 die Druckleitung 30 in einen geberseitigen Druckleitungsabschnitt 64, der permanent an den Geberdruckraum 18 angeschlossen ist, und einen nehmerseitigen Druckleitungsabschnitt 66, der stets mit dem Nehmerdruckraum 24 verbunden ist. Bei dem hier dargestellten Proportionalventil 42 handelt es sich um ein 2/2-Wege Proportionalventil, das über eine Ventilfeder 68 in Durchgangs-Null-Stellung federvorgespannt ist und mittels eines elektromagnetischen Antriebs 70 gegen die Kraft der Ventilfeder 68 definiert geschlossen werden kann. Zur Bestromung des elektromagnetischen Antriebs 70 ist dieser über eine elektrische Steuerleitung 72 an die Steuereinheit 40 angeschlossen. Was die strukturelle Ausbildung des Proportionalventils 42 angeht, kann dieses z.B. als elektromagnetisch betätigbares, in Durchgangs-Null-Stellung federvorgespanntes 2/2-Wege Kugelsitzventil ausgeführt sein, wie es prinzipiell aus der DE 196 33 420 A1 (siehe dort Fig. 4) der gleichen Anmelderin bekannt ist.

An den nehmerseitigen Druckleitungsabschnitt 66 ist der Pumpenausgang 36 der Motorpumpe 32 über eine Förderleitung 74 angeschlossen, in die das zweite Rückschlagventil 46 so geschaltet ist, dass es in Richtung der Motorpumpe 32 sperrt. Der Pumpeneingang 34 der Motorpumpe 32 ist über eine Ansaugleitung 76 permanent mit dem Vorratsbehälter 22 fluidverbunden. Zur Bestromung bzw. Ansteuerung des elektrischen Pumpenantriebs M ist dieser über eine elektrische Steuerleitung 78 an die Steuereinheit 40 angeschlossen. Für die Motorpumpe 32 kommen als Pumpentypen z.B. Zahnradpumpen, Rollenzellenpumpen, Flügelzellenpumpen und Radial- oder Axial-Kolbenpumpen in Frage, soweit sie in der Lage sind, für hydraulische Kupplungsbetätigungen übliche Drücke (bis 40 bar) zu erzeugen. Für die vorliegende Anwendung ist es prinzipiell ausreichend, wenn die Motorpumpe 32 als Konstantförderpumpe ausgeführt ist, die für eine vorbestimmte Drehzahl des Pumpenantriebs M einen konstanten Volumenstrom liefert. Ggf. kann der Pumpenantrieb M in der Drehzahl steuerbar sein, um auf etwaige Druckschwankungen reagieren zu können und mit kleinen Drehzahlen auch ein fein dosierbares "Ein-" bzw. "Nachschieben" von Hydraulikfluid zu ermöglichen.

Der Nehmerzylinder 28 weist in an sich bekannter Weise ein Nehmerzylindergehäuse 80 auf, in dem ein Nehmerkolben 82 längsverschieblich und am Umfang auf nicht näher gezeigte Weise gegenüber dem Nehmerzylindergehäuse 80 abgedichtet geführt ist. Der Nehmerkolben 82 begrenzt hier zusammen mit dem Nehmerzylindergehäuse 80 den Nehmerdruckraum 24, der über einen Druckanschluss 84 mit dem Hydraulikfluid beaufschlagbar ist. Hierfür ist die Druckleitung 30 mit ihrem nehmerseitigen Druckleitungsabschnitt 66 an den Druckanschluss 84 angeschlossen. Auf der vom Nehmerdruckraum 24 abgewandten Seite des Nehmerkolbens 82 ist an diesem eine Kolbenstange 86 angebracht, über die der Nehmerzylinder 28 mit der Reibkupplung 12 auf an sich bekannte Weise in Wirkverbindung steht, wobei eine im Nehmerdruckraum 24 angeordnete Druckfeder 88 die beteiligten zylinder- und kupplungsseitigen Bauelemente auf Anlage hält.

Bei dem dargestellten Ausführungsbeispiel ist an der Nehmeranordnung 26, genauer dem Nehmerzylindergehäuse 80 ein über eine Signalleitung 90 elektrisch an die Steuereinheit 40 angeschlossener Wegsensor 92 vorgesehen, mittels dessen ein nehmerseitiger, für einen Ausrückzustand der Reibkupplung 12 repräsentativer Betätigungsweg s erfassbar ist. Wie bei dem Geberzylinder 16 kann es sich hierbei um einen zylindergehäusefesten, magnetflussempfindlichen Sensor, etwa einen Hallsensor handeln, der mit einem am Nehmerkolben 82 angebrachten Signalelement in Form eines Permanentmagneten (nicht dargestellt) zusammenwirkt, um den Betätigungsweg s des Nehmerkolbens 82 zu erfassen.

Wenngleich im dargestellten Ausführungsbeispiel der Nehmerzylinder 28 in "klassischer" Bauart dargestellt ist, kann es sich hierbei ebenfalls - und aufgrund seiner sehr kompakten ringförmigen Bauform in konkreter Anwendung sogar zumeist bevorzugt - um einen sogenannten "Zentralausrücker" oder "-einrücker" handeln, wie sie prinzipiell z.B. in den Druckschriften DE 197 16 473 A1 oder DE 199 44 083 A1 der gleichen Anmelderin beschrieben werden. Bezüglich des Aufbaus und der Funktion von wegsensierten Zentralausrückern sei an dieser Stelle zudem ausdrücklich auf etwa die Druckschriften DE 102 22 730 A1 und DE 20 2006 014 024 U1 der gleichen Anmelderin verwiesen.

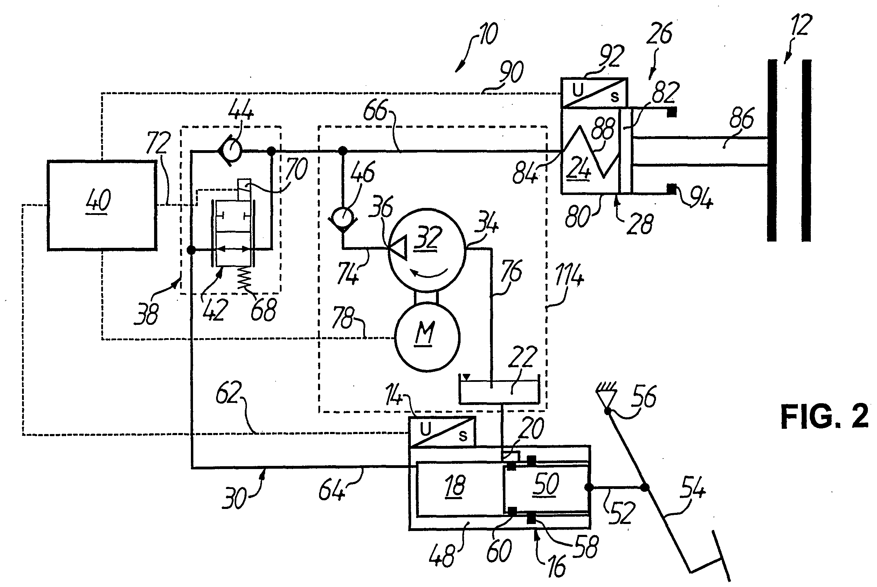

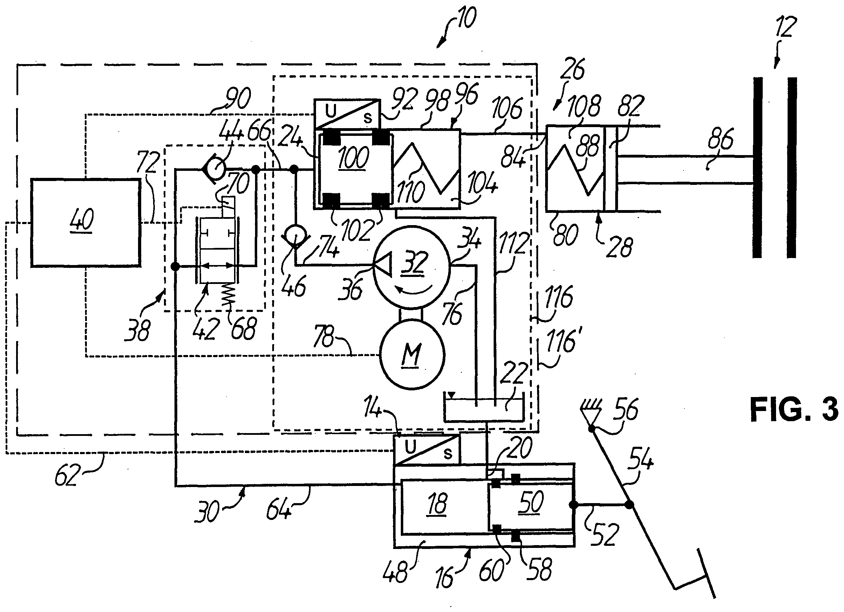

Bevor die für die verschiedenen Ausführungsbeispiele in wesentlichen Punkten übereinstimmende Funktion der hydraulischen Betätigungsvorrichtung 10 erläutert wird, soll nachfolgend kurz beschrieben werden, worin sich das zweite und dritte Ausführungsbeispiel gemäß den Fig. 2 bzw. 3 von dem vorbeschriebenen ersten Ausführungsbeispiel (Fig. 1) unterscheidet.

Bei dem zweiten Ausführungsbeispiel gemäß Fig. 2 weist der Nehmerzylinder 28 einen Anschlag 94 auf, der dazu dient, den Betätigungsweg s des mit der Reibkupplung 12 über die Kolbenstange 86 mechanisch verbundenen Nehmerkolbens 82 zu begrenzen. Wie hier gezeigt kann der Anschlag 94 ringförmig ausgebildet und auf geeignete Weise am Innenumfang des Nehmerzylindergehäuses 80 angebracht sein, und zwar in axialer Richtung gesehen an einer Stelle des Nehmerzylinders 28, an der der hydraulisch beaufschlagte Nehmerkolben 82 am Anschlag 94 zur Anlage gelangt bevor die Kolbenstange 86 überweit aus dem Nehmerzylindergehäuse 80 ausgefahren werden kann. Somit kann auf einfache Weise ein "Überdrücken" und eine damit eventuell einhergehende Beschädigung der Reibkupplung 12 zuverlässig verhindert werden.

Bei dem in Fig. 3 dargestellten dritten Ausführungsbeispiel umfasst die Nehmeranordnung 26 einen aus Richtung des Geberzylinders 16 gesehen hydraulisch vor den Nehmerzylinder 28 geschalteten Portionierzylinder 96, der den Nehmerdruckraum 24 aufweist. In einem Zylindergehäuse 98 des Portionierzylinders 96 ist ein Trennkolben 100 längsverschieblich aufgenommen, der am Kolbenumfang mit zwei axial voneinander beabstandeten Dichtelementen 102 versehen ist, die gegenüber einer Lauffläche am Innenumfang des Zylindergehäuses 98 gleitend abdichten. Der Trennkolben 100 trennt im Zylindergehäuse 98 den Nehmerdruckraum 24 der Nehmeranordnung 26 von einem weiteren Geberdruckraum 104, der seinerseits permanent über eine weitere Druckleitung 106 mit einem weiteren Nehmerdruckraum 108 in dem mit der Reibkupplung 12 wirkverbundenen Nehmerzylinder 28 kommuniziert.

Eine im weiteren Geberdruckraum 104 aufgenommene Druckfeder 110 spannt den Trennkolben 100 in Richtung des Nehmerdruckraums 24, d.h. in Fig. 3 nach links in die dargestellte Ruhestellung vor. In der Ruhestellung des Trennkolbens 100 ist der weitere Geberdruckraum 104 über eine Nachlaufleitung 112 mit dem Vorratsbehälter 22 fluidverbunden, um Temperaturdehnungen, Verschleißweg, etc. an der Reibkupplung 12 bzw. dem Nehmerzylinder 28 zu kompensieren. Die Nehmeranordnung 26 schließt bei diesem Ausführungsbeispiel also den Nehmerzylinder 28, den den Nehmerdruckraum 24 aufweisenden Portionierzylinder 96, die weitere Druckleitung 106 zwischen den Zylindern 28, 96 und die Nachlaufleitung 112 vom Vorratsbehälter 22 zum weiteren Geberdruckraum 104 im Portionierzylinder 96 ein.

Bei einer hydraulischen Beaufschlagung des Nehmerdruckraums 24 über den nehmerseitigen Druckleitungsabschnitt 66 der Druckleitung 30 verfährt der Trennkolben 100 gegen die Kraft der Druckfeder 110 in Fig. 3 nach rechts, wobei das geberdruckraumseitige, d.h. in Fig. 3 rechte Dichtelement 102 die Nachlaufverbindung zum Vorratsbehälter 22 trennt, so dass sich im weiteren Geberdruckraum 104 ein Druck aufbauen kann. Dieser hydraulische Druck liegt seinerseits über die weitere Druckleitung 106 im weiteren Nehmerdruckraum 108 an und kann dort den Nehmerkolben 82 des Nehmerzylinders 28 betätigungswirksam beaufschlagen. Da sich hierbei der Trennkolben 100 im Portionierzylinder 96 nicht beliebig weit verschieben lässt, kommt dem Portionierzylinder 96 auch eine Anschlagfunktion zu, analog dem Anschlag 94 beim zweiten Ausführungsbeispiel gemäß Fig. 2.

Im dargestellten Ausführungsbeispiel ist weiterhin der vorbeschriebene Wegsensor 92 am Portionierzylinder 96 vorgesehen, d.h. an dessen Zylindergehäuse 98 befestigt und wirkt mit einem nicht gezeigten Signalelement am Trennkolben 100 zusammen, um den Hub des Trennkolbens 100 zu erfassen, der aufgrund der hydraulischen Verbindung des Portionierzylinders 96 zum Nehmerzylinder 28 repräsentativ für einen Aus- bzw. Einrückzustand der Reibkupplung 12 ist.

Zu den verschiedenen Ausführungsbeispielen sei schließlich noch der modulare Aufbau der Schaltung erwähnt. Während bei den Ausführungsbeispielen gemäß den Fig. 1 und 2 der Vorratsbehälter 22, die Motorpumpe 32 mit dem elektrischen Pumpenantrieb M, das zweite Rückschlagventil 46 und die zugehörigen hydraulischen Verbindungen zu einem Modul 114 zusammengefasst sind, das ggf. auch die Ventilanordnung 38 und die Steuereinheit 40 umfassen kann, sind bei dem dritten Ausführungsbeispiel gemäß Fig. 3 der Vorratsbehälter 22, die Motorpumpe 32 mit dem elektrischen Pumpenantrieb M, das zweite Rückschlagventil 46, der Portionierzylinder 96 mit dem Wegsensor 92 (so vorhanden) und die zugehörigen hydraulischen Verbindungen zu einem Modul 116 zusammengefasst. Wie bei 116' angedeutet kann dieses Modul überdies die Ventilanordnung 38 und die Steuereinheit 40 beinhalten, so dass nur das Modul 116' als separate Baueinheit zwischen den Geberzylinder und den Nehmerzylinder einer konventionellen, manuell betätigbaren hydraulischen Kupplungsbetätigung einzufügen wäre, um auch (teil)automatisierte Kupplungsbetätigungen durchzuführen.

Nachfolgend soll für alle Ausführungsbeispiele gemeinsam die Funktion der hydraulischen Betätigungsvorrichtung 10 kurz erläutert werden, wobei die Fälle (A) manuelle Betätigung, (B) "Knallstart"-Verhinderung, (C) automatisierte Betätigung und (D) "überlappende" Betätigungen unterschieden werden sollen.

(A) Manuelle Betätigung: Der Geberzylinder 16 wird über das Pedal 54 manuell betätigt. Die aus dem Geberdruckraum 18 von dem Geberkolben 50 verdrängte Hydraulikflüssigkeit gelangt über den geberseitigen Druckleitungsabschnitt 64, das stromlos offene Proportionalventil 42 und/oder das erste Rückschlagventil 44 der Ventilanordnung 38 und den nehmerseitigen Druckleitungsabschnitt 66 der Druckleitung 30 zum Nehmerdruckraum 24 im Nehmerzylinder 28 (Fig. 1 & 2) bzw. im zwischengeschalteten Dosier- bzw. Portionierzylinder 96 (Fig. 3). Im Ergebnis wird der Nehmerkolben 82 unmittelbar (Fig. 1 & 2) bzw. mittelbar (Fig. 3: über den Trennkolben 100, den weiteren Geberdruckraum 104, die weitere Druckleitung 106 und den weiteren Nehmerdruckraum 108) hydraulisch beaufschlagt und verschoben, um die Reibkupplung 12 auszurücken.

Beim Rückhub (Entlasten des Pedals 54) fließt die Hydraulikflüssigkeit vom Nehmerdruckraum 24 über den nehmerseitigen Druckleitungsabschnitt 66, das stromlos offene Proportionalventil 42 der Ventilanordnung 38 und den geberseitigen Druckleitungsabschnitt 64 der Druckleitung 30 in den Geberdruckraum 18 des Geberzylinders 16 zurück. Der Volumensausgleich zur Kompensation von Wärmedehnungen, Verschleiß an der Reibkupplung 12 oder Verformungen der Reibkupplung 12 bei hohen Drehzahlen erfolgt über das Ausgleichssystem des Geberzylinders 16 (Nachlaufbereich 20) bzw. des Portionierzylinders 96 (Nachlaufleitung 112) im Falle der Fig. 3.

(B) "Knallstart"-Verhinderung (im Fachjargon auch "Peak Torque Limiter"(PTL)-Funktion genannt): Werden von den Wegsensoren 14, 92 am Geberzylinder 16 und/oder Nehmerzylinder 28 bzw. Portionierzylinder 96 zu hohe Schließgeschwindigkeiten der Reibkupplung 12 erkannt, mit der Gefahr des Auftretens von zu hohen Spitzenmomenten verursacht durch die gespeicherte Arbeit in den trägen Massen von Kupplung und Verbrennungsmotor, kann das Proportionalventil 42 der Ventilanordnung 38 durch geeignete Ansteuerung des elektromagnetischen Antriebs 70 über die Steuereinheit 40 ganz oder teilweise geschlossen und die Schließgeschwindigkeit der Reibkupplung 12 auf ein verträgliches Maß geregelt werden.

(C) Automatisierte Betätigung: Der elektrische Pumpenantrieb M der Motorpumpe 32 und das Proportionalventil 42 der Ventilanordnung 38, genauer dessen elektromagnetischer Antrieb 70 werden über die elektronische Steuereinheit 40 angesteuert, die auch die Signale der Wegsensoren 14, 92 (und/oder ggf. vorhandener Drucksensoren) einliest. Erhält die Steuereinheit 40 einen Befehl zum Öffnen bzw. Ausrücken der Reibkupplung 12, schaltet sie den elektrischen Pumpenantrieb M ein, worauf von der Motorpumpe 32 Hydraulikflüssigkeit aus dem Vorratsbehälter 22 über die Ansaugleitung 76 angesaugt und über die Förderleitung 74 und das zweite Rückschlagventil 46 in den nehmerseitigen Druckleitungsabschnitt 66 der Druckleitung 30 gefördert wird, und bestromt den elektromagnetischen Antrieb 70 des Proportionalventils 42 auf einen Wert entsprechend dem erwarteten Bedarf. Das Proportionalventil 42 bleibt solange geschlossen bis der dem eingespeisten Strom entsprechende Druck im nehmerseitigen Druckleitungsabschnitt 66 erreicht ist und das Proportionalventil 42 automatisch öffnet, um das Kräftegleichgewicht zwischen Magnetkraft und den hydraulischen Kräften am Proportionalventil 42 zu halten (Staudruckprinzip), oder die geforderte Position durch den Wegsensor 92 an die Steuereinheit 40 gemeldet und der Ventilstrom am Proportionalventil 42 über die Steuereinheit 40 zurückgenommen wird. In diesem Fall kann dann die Motorpumpe 32 abgeschaltet werden, der hydraulische Druck im System wird über das geschlossene Proportionalventil 42 und die beiden Rückschlagventile 44, 46 gehalten.

Soll die Reibkupplung 12 wieder geschlossen bzw. eingerückt werden, so wird der Ventilstrom im Proportionalventil 42 von der Steuereinheit 40 abgesenkt und die Bewegung des Nehmerkolbens 82 im Nehmerzylinder 28 unter Zuhilfenahme der Wegsignale des Wegsensors 92 geeignet geregelt. Die Hydraulikflüssigkeit strömt hierbei vom Proportionalventil 42 über den geberseitigen Druckleitungsabschnitt 64 der Druckleitung 30, den Geberdruckraum 18 des in Ruhestellung befindlichen Geberzylinders 16 und dessen geeignet dimensionierten Ausgleichssystem (Nachlaufbereich 20) zurück in den Vorratsbehälter 22.

(D) "Überlappende" Betätigungen: Eine manuelle Betätigung (siehe A) wird durch den Wegsensor 14 des Geberzylinders 16 an die Steuereinheit 40 gemeldet. Automatisierte Betätigungen (siehe C) können bei Vorliegen einer im Begriff befindlichen manuellen Betätigung daher über die Steuereinheit 40 ausgeschlossen werden. Allerdings kann es auch vorteilhaft sein, beispielsweise zum Schutz der Reibkupplung 12 gegen übermäßigen Verschleiß, eine nicht vollständig geöffnete bzw. ausgerückte Reibkupplung 12 ganz zu öffnen, sofern hierdurch keine sicherheitskritische Situation entstehen kann. In diesem Fall würden der elektromagnetische Antrieb 70 des Proportionalventils 42 von der Steuereinheit 40 bestromt, der elektrische Pumpenantrieb M der Motorpumpe 32 angeschaltet und Hydraulikflüssigkeit nachdosiert, bis die Reibkupplung 12 ganz offen bzw. ausgerückt ist, worauf das Proportionalventil 42 wieder geöffnet werden kann. Beim manuellen Schließen bzw. Einrücken der Reibkupplung 12 über das Pedal 54 muss dann das nachdosierte Volumen an Hydraulikflüssigkeit in der Druckleitung 30 über das Nachlaufsystem (Nachlaufbereich 20) des Geberzylinders 16 in den Vorratsbehälter 22 entweichen.

Ist eine automatisierte Betätigung im Begriff, und der Fahrer betätigt zusätzlich das Pedal 54, um die Reibkupplung 12 manuell auszurücken, was über den Sensor 14 am Geberzylinder 16 erkannt wird, so wird die automatisierte Betätigung von der Steuereinheit 40 abgebrochen. Das bereits oder noch im Nehmerzylinder 28 bzw. Portionierzylinder 96 befindliche Volumen an Hydraulikflüssigkeit reduziert den möglichen Betätigungsweg am Geberzylinder 16 und zeigt dem Fahrer an, das er in einen automatisierten Prozess eingegriffen hat. Der Fahrer ist aber stets der Souverän, etwaige Fehlsteuerungen der Steuereinheit 40 können durch ihn übersteuert werden. Nach dem Eingreifen des Fahrers bleibt das System passiv bis der Kupplungsvorgang abgeschlossen ist. Beim manuellen Schließen bzw. Einrücken der Reibkupplung 12 muss dann das vorher von der Motorpumpe 32 in die Druckleitung 30 eingespeiste Volumen an Hydraulikflüssigkeit wieder über das Nachlaufsystem (Nachlaufbereich 20) des Geberzylinders 16 in den Vorratsbehälter 22 entweichen.

Es wird eine hydraulische Betätigungsvorrichtung für eine Kraftfahrzeug-Reibkupplung offenbart, umfassend einen manuell ansteuerbaren, mittels eines Sensors betätigungssensierten Geberzylinder mit einem Geberdruckraum, der in Ruhestellung über einen Nachlaufbereich mit einem Vorratsbehälter fluidverbunden ist, eine einen Nehmerdruckraum aufweisende Nehmeranordnung, die einen mit der Kraftfahrzeug-Reibkupplung wirkverbundenen Nehmerzylinder hat, eine den Geberdruckraum mit dem Nehmerdruckraum verbindende Druckleitung, in die eine elektrisch betätigbare Ventilanordnung geschaltet ist, eine eingangsseitig an den Vorratsbehälter angeschlossene und ausgangsseitig mit der Druckleitung verbindbare Motorpumpe sowie eine Steuereinheit, an der die elektrischen Teile (Sensor, Ventilanordnung, Motorpumpe) angeschlossen sind. Die Ventilanordnung umfasst erfindungsgemäß in Parallelschaltung ein elektrisch betätigbares Proportionalventil und ein in Richtung des Geberdruckraums sperrendes erstes Rückschlagventil, während die Motorpumpe über ein in Richtung der Motorpumpe sperrendes zweites Rückschlagventil zwischen der Ventilanordnung und dem Nehmerdruckraum an die Druckleitung angeschlossen ist.

### BEZUGSZEICHENLISTE

- 10: hydraulische Betätigungsvorrichtung
- 12: Reibkupplung
- 14: Sensor
- 16: Geberzylinder
- 18: Geberdruckraum
- 20: Nachlaufbereich
- 22: Vorratsbehälter
- 24: Nehmerdruckraum
- 26: Nehmeranordnung
- 28: Nehmerzylinder
- 30: Druckleitung
- 32: Motorpumpe
- 34: Pumpeneingang
- 36: Pumpenausgang
- 38: Ventilanordnung
- 40: Steuereinheit
- 42: Proportionalventil
- 44: erstes Rückschlagventil
- 46: zweites Rückschlagventil
- 48: Geberzylindergehäuse
- 50: Geberkolben
- 52: Kolbenstange
- 54: Pedal
- 56: Schwenklager
- 58: (Sekundär)Dichtelement
- 60: (Primär)Dichtelement
- 62: Signalleitung
- 64: geberseitiger Druckleitungsabschnitt
- 66: nehmerseitiger Druckleitungsabschnitt
- 68: Ventilfeder
- 70: elektromagnetischer Antrieb
- 72: elektrische Steuerleitung
- 74: Förderleitung
- 76: Ansaugleitung
- 78: elektrische Steuerleitung
- 80: Nehmerzylindergehäuse
- 82: Nehmerkolben
- 84: Druckanschluss
- 86: Kolbenstange
- 88: Druckfeder
- 90: Signalleitung
- 92: Wegsensor
- 94: Anschlag
- 96: Portionierzylinder
- 98: Zylindergehäuse
- 100: Trennkolben
- 102: Dichtelement
- 104: weiterer Geberdruckraum
- 106: weitere Druckleitung
- 108: weiterer Nehmerdruckraum
- 110: Druckfeder
- 112: Nachlaufleitung
- 114: Modul
- 116, 116': Modul

- S: Hub, Betätigungsweg
- M: elektrischer Pumpenantrieb
- U: Spannungssignal

## Patentansprüche

1. Vorrichtung (10) zur hydraulischen Betätigung einer Kraftfahrzeug-Reibkupplung (12), mit einem manuell ansteuerbaren, mittels eines Sensors (14) betätigungssensierten Geberzylinder (16), der einen Geberdruckraum (18) hat, welcher in einer Ruhestellung über einen Nachlaufbereich (20) mit einem Vorratsbehälter (22) fluidverbunden ist, einer einen Nehmerdruckraum (24) aufweisenden Nehmeranordnung (26), die zumindest einen mit der Kraftfahrzeug-Reibkupplung (12) wirkverbundenen Nehmerzylinder (28) umfasst, einer Druckleitung (30) zur hydraulischen Verbindung des Geberdruckraums (18) mit dem Nehmerdruckraum (24), einer eingangsseitig hydraulisch an den Vorratsbehälter (22) angeschlossenen Motorpumpe (32, M), deren Pumpenausgang (36) hydraulisch mit der Druckleitung (30) verbindbar ist, einer elektrisch betätigbaren Ventilanordnung (38), die in die Druckleitung (30) geschaltet ist, und einer Steuereinheit (40), an die der Sensor (14), die Motorpumpe (32, M) und die Ventilanordnung (38) für eine manuelle und/oder automatisierte Betätigung der Kraftfahrzeug-Reibkupplung (12) elektrisch angeschlossen sind, **dadurch gekennzeichnet, dass** die Ventilanordnung (38) in Parallelschaltung ein elektrisch betätigbares Proportionalventil (42) und ein in Richtung des Geberdruckraums (18) sperrendes erstes Rückschlagventil (44) umfasst, während die Motorpumpe (32, M) über ein in Richtung der Motorpumpe (32, M) sperrendes zweites Rückschlagventil (46) zwischen der Ventilanordnung (38) und dem Nehmerdruckraum (24) hydraulisch an die Druckleitung (30) angeschlossen ist.

2. Vorrichtung (10) nach Anspruch 1, **dadurch gekennzeichnet, dass** das Proportionalventil (42) in Durchgangs-Null-Stellung federvorgespannt ist.

3. Vorrichtung (10) nach Anspruch 1 oder 2, **dadurch gekennzeichnet, dass** der Nehmerzylinder (28) einen mit der Kraftfahrzeug-Reibkupplung (12) mechanisch verbundenen Nehmerkolben (82) und einen Anschlag (94) aufweist, der dazu dient, einen Betätigungsweg (s) des Nehmerkolbens (82) zu begrenzen.

4. Vorrichtung (10) nach einem der vorhergehenden Ansprüche, **dadurch gekennzeichnet, dass** an der Nehmeranordnung (26) ein elektrisch an die Steuereinheit (40) angeschlossener Wegsensor (92) vorgesehen ist, mittels dessen ein nehmerseitiger, für einen Ausrückzustand der Kraftfahrzeug-Reibkupplung (12) repräsentativer Betätigungsweg (s) erfassbar ist.

5. Vorrichtung (10) nach einem der vorhergehenden Ansprüche, **dadurch gekennzeichnet, dass** die Nehmeranordnung (26) einen hydraulisch vor den Nehmerzylinder (28) geschalteten Portionierzylinder (96) umfasst, der den Nehmerdruckraum (24) aufweist.

6. Vorrichtung (10) nach Anspruch 5, **dadurch gekennzeichnet, dass** wenigstens der Vorratsbehälter (22), die Motorpumpe (32, M), das zweite Rückschlagventil (46) und der Portionierzylinder (96), ggf. mit dem Wegsensor (92), zu einem Modul (116, 116') zusammengefasst sind.

7. Vorrichtung (10) nach Anspruch 6, **dadurch gekennzeichnet, dass** das Modul (116') auch die Ventilanordnung (38) und ggf. die Steuereinheit (40) umfasst.

## Claims

1. Device (10) for hydraulic actuation of a motor vehicle friction clutch (12), comprising a manually activatable master cylinder (16), the actuation of which is sensed by a sensor (14) and which has a master pressure chamber (18) which in a rest setting is in fluid connection with a reservoir (22) by way of a replenishing region (20), a slave arrangement (26), which has a slave pressure chamber (24) and which comprises at least one slave cylinder (28) operatively connected with the motor vehicle friction clutch (12), a pressure line (30) for hydraulic connection of the master pressure chamber (18) with the slave pressure chamber (24), a motor pump (32, M), which is hydraulically connected at the inlet side with the reservoir (22) and the pump outlet (36) of which is hydraulically connectible with the pressure line (30), an electrically actuable valve arrangement (38) connected into the pressure line (30), and a control unit (40), with which the sensor (14), the motor pump (32, M) and the valve arrangement (38) are electrically connected for manual and/or automatic actuation of the motor vehicle friction clutch (12), **characterized in that** the valve arrangement (38) comprises in parallel connection an electrically actuable proportional valve (42) and a first non-return valve (44) blocking in the direction of the master pressure chamber (18), the motor pump (32, M) being hydraulically connected with the pressure line (30) by way of a second non-return valve (46), which blocks in the direction of the motor pump (32, M), between the valve arrangement (38) and the slave pressure chamber (24).

2. Device (10) according to claim 1, **characterized in that** the proportional valve (42) is spring-biased into a passage zero setting.

3. Device (10) according to claim 1 or 2, **characterized in that** the slave cylinder (28) comprises a slave piston (82), which is mechanically connected with the motor vehicle friction clutch (12), and an abutment (94) serving the purpose of limiting an actuation travel (s) of the slave piston (82).

4. Device (10) according to any one of the preceding claims, **characterized in that** a travel sensor (92) electrically connected with the control unit (40) is provided at the slave arrangement (26), by which sensor an actuation travel (s) at the slave side and representative of a disengagement state of the motor vehicle friction clutch (12) is detectable.

5. Device (10) according to any one of the preceding claims, **characterized in that** the slave arrangement (26) comprises a portioning cylinder (96) which is hydraulically connected upstream of the slave cylinder (28) and which has the slave pressure chamber (24).

6. Device (10) according to claim 5, **characterized in that** at least the reservoir (22), the motor pump (32, M), the second non-return valve (46) and the portioning cylinder (96), optionally together with the travel sensor (92), are combined to form a module (116, 116').

7. Device (10) according to claim 6, **characterized in that** the module (116') also includes the valve arrangement (38) and optionally the control unit (40).

## Revendications

1. Dispositif (10) destiné à l'actionnement hydraulique d'un embrayage à friction (12) de véhicule automobile, comprenant
un maître-cylindre (16), qui peut être commandé manuellement, dont l'actionnement est détecté au moyen d'un détecteur (14), et qui possède une chambre de pression de maître-cylindre (18) qui, dans une position de repos, est reliée sur le plan fluidique, à un réservoir (22) par l'intermédiaire d'une zone d'alimentation de compensation (20),
un agencement récepteur (26), qui comprend au moins un cylindre récepteur (28) en liaison d'interaction avec l'embrayage à friction (12) de véhicule automobile, et comporte une chambre de pression de cylindre récepteur (24),
une conduite de pression (30) pour assurer la liaison hydraulique de la chambre de pression de maître-cylindre (18) avec la chambre de pression de cylindre récepteur (24),
une motopompe (32, M), qui, du côté entrée, est reliée hydrauliquement au réservoir (22), et dont la sortie de pompe (36) peut être reliée hydrauliquement à la conduite de pression (30),
un agencement de vanne (38) pouvant être actionné électriquement et monté dans la conduite de pression (30),
et une unité de commande (40) à laquelle sont raccordés électriquement le détecteur (14), la motopompe (32, M) et l'agencement de vanne (38), pour un actionnement manuel et/ou automatisé de l'embrayage à friction (12) de véhicule automobile,
**caractérisé en ce que** l'agencement de vanne (38) comprend selon un montage en parallèle, une vanne proportionnelle (42) pouvant être actionnée électriquement, et un premier clapet anti-retour (44) fermant en direction de la chambre de pression de maître-cylindre (18), tandis que la motopompe (32, M) est raccordée hydrauliquement, par l'intermédiaire d'un deuxième clapet anti-retour (46) fermant en direction de la motopompe (32, M), à la conduite de pression (30), entre l'agencement de vanne (38) et la chambre de pression de cylindre récepteur (24).

2. Dispositif (10) selon la revendication 1, **caractérisé en ce que** la vanne proportionnelle (42) est précontrainte par ressort dans la position nulle de passage.

3. Dispositif (10) selon la revendication 1 ou la revendication 2, **caractérisé en ce que** le cylindre récepteur (28) comprend un piston récepteur (82) relié mécaniquement à l'embrayage à friction (12) de véhicule automobile, et une butée (94) qui sert à limiter une course de déplacement d'actionnement (s) du piston récepteur (82).

4. Dispositif (10) selon l'une des revendications précédentes, **caractérisé en ce que** dans l'agencement récepteur (26) il est prévu un capteur de course de déplacement (92), qui est relié électriquement à l'unité de commande (40), et au moyen duquel il est possible de relever une course de déplacement d'actionnement (s) représentative d'un état de débrayage de l'embrayage à friction (12) de véhicule automobile.

5. Dispositif (10) selon l'une des revendications précédentes, **caractérisé en ce que** l'agencement récepteur (26) comprend un cylindre à fractionner (96) monté hydrauliquement en amont du cylindre récepteur (28) et qui présente la chambre de pression de cylindre récepteur (24).

6. Dispositif (10) selon la revendication 5, **caractérisé en ce qu'**au moins le réservoir (2), la motopompe (32, M), le deuxième clapet anti-retour (46) et le cylindre à fractionner (96), le cas échéant avec le capteur de course de déplacement (92), sont réunis en un module (116, 116').

7. Dispositif (10) selon la revendication 6, **caractérisé en ce que** le module (116') comprend également l'agencement de vanne (38) et, le cas échéant, l'unité de commande (40).
